# EUROPÄISCHE PATENTANMELDUNG

(11) **EP 1 162 789 A1**
(43) Veröffentlichungstag der Anmeldung: **12.12.2001**
(21) Anmeldenummer: 00112299.3
(22) Anmeldetag: 08.06.2000
(51) Int. Cl.: H04L 12/56

(54) **Verfahren zur Verwaltung von Pfadinformationen und deren Änderungen in einem MPLS-Netzwerk**

(71) Anmelder: SIEMENS AKTIENGESELLSCHAFT, 80333 München (DE)
(72) Erfinder: Rautenberg, Mathias, 82223 Eichenau (DE)

(57) **Zusammenfassung**

Die Erfindung betrifft ein rechnergestütztes Verfahren zur Verwaltung von Pfadänderungen in Netzwerken, insbesondere in einem MPLS-Netzwerk und eine zugehörige Datenstruktur (A', B'), die das zeit- und aufwandsoptimierte Auffinden von allen relevanten Informationen (24) und deren Änderungen ermöglicht. Dazu werden die Liste FIB um einen Pointer (10(3)) pro Objekt (16) und die Liste LIB um zwei Pointer (10(1), 10(2)) pro Objekt (16) erweitert. Bei einer Pfadänderung müssen lediglich alle Pointer (10(3), 10(1), 10(2)) konsistent nachgezogen werden.

## Beschreibung

Die Erfindung betrifft eine Datenstruktur zur Verwendung bei der Verarbeitung von Routing- und/oder Forwarding Informationen in einem Netzwerk und ein rechnergestütztes Verfahren zur Verarbeitung von Forwarding- und/oder Routing-Informationen in einem Netzwerk unter Zugriff auf zumindest eine erste und zweite Datenstruktur.

Der Begriff Multi-Protocoll-Label-Switching-Netz (nachfolgend kurz: MPLS-Netz) betrifft eine Netzwerktechnologie, die sehr neu ist und für die kommerzielle Implementierungen erst seit Ende 1999 auf dem Markt verfügbar sind. Diese Technologie stellt einen Switching-Mechansimus zur Verfügung, der auf der Verwendung von sog. Labels basiert.
MPLS verwendet als normalen, üblichen Modus ein Layer 3 (L3) Routing (IP Routing, wie IPx, beispielsweise Ipv4 oder Ipv6) in allen Knoten, um den gewählten Pfad zu bestimmen. MPLS ist aber mit einer Vielzahl von anderen Routing Protokollen kompatibel (beispielsweise OSPF, BCP, RIP oder anderen) und läuft grundsätzlich unabhängig von den zugrundeliegenden Routing Protokollen ab.
MPLS Netze werden für verschiedenste Link-Level-Techniken, wie Packet-over-Sonet, Frame Relay, ATM, Ethernet, Token Ring und anderen implementiert.
Der Bestandteil "MP" (Multi Protocoll) verweist auf diese Tatsache, nämlich, daß diese Netze verschiedene Protokolle unterstützen.
Der weitere Bestandteil "LS" (Label Switching) verweist seinerseits auf den Umstand, daß MPLS-Netze ein einfaches und zusammengefaßtes Forwarding von mehreren Paketen unterstützen, so daß bestimmte Pakete als eine Einheit weitergeleitet werden und dabei sicherzustellen, daß ein bestimmtes Paket auf einem bestimmten Pfad verläuft. "LS" bezieht sich insbesondere auf den Umstand, daß sog. "Label Switched Paths" (LSP) geschaltet werden. Auf diesen Pfaden werden dann verschiedene Datenströme zu einem gemeinsamen Label gehörig zusammengefaßt, um auf einem gemeinsamen Pfad (LSP) geschaltet werden zu können.
Bei Eintritt eines Paketes in eine MPLS-Domäne wird jedem Paket ein Label zugewiesen und daraufhin auf dem Pfad weitergeleitet.
Bei jedem Label Switched Router (LSR) auf dem Pfad wird dann lediglich das Label verwendet, um das Paket zum nächsten Hop weiterzuleiten. Die Labels sind dabei von strikt lokaler Bedeutung zwischen jeweils benachbarten Knoten. Sie werden also verwendet, um ein vereinfachtes Forwarding Paradigma zu schaffen. Dies wird gewährleistet, indem die Einrichtung, die die Labels verwendet, um Pakete weiterzuleiten, alle Pakete mit demselben Label auf die selbe Art und Weise weiterleitet. Somit wird das Forwarding stark vereinfacht, da das Label als Abkürzung oder Indizierung für die jeweilige Forwarding Entscheidung eines Routers dient.
Der grundlegende Forwarding Mechanismus besteht darin, das Eingangs-Label nachzusehen und daraufhin das Ausgangs-Label, den Port und gegebenenfalls weitere Informationen zu bestimmen.
Bei den MPLS-Netzen wird eine sog. "Forwarding Äquivalenz Klasse" (Forwarding Equivalence Class, nachfolgend kurz: FEC) definiert, mit der eine Gruppe von IP-Paketen bezeichnet wird, die auf die gleiche Art und Weise weitergeleitet werden und somit dieselben Forwarding Informationen aufweisen. Das Label wird als Bezeichnung verwendet, um die jeweilige FEC zu identifizieren.
Die Zuweisung eines Paketes zu einer FEC erfolgt üblicherweise aufgrund seiner Netzwerk-Schichten-Zieladresse. Das Label kann jedoch niemals eine vollständige Encodierung dieser Adresse sein. Bezüglich des Forwardings sind allerdings verschiedene Pakete, die in dieselbe FEC abgebildet werden, ununterscheidbar.

Ist ein Paket nun in einem (herkömmlichen, nicht auf einem Label-Forwarding basierenden) Netzwerk von einem Router zum nächsten unterwegs, so trifft jeder Router eine eigene Forwarding Entscheidung für das jeweilige Paket. Jeder Router analysiert also den Header des Paketes und auf jedem Router läuft ein Netzwerkschichten Routing Algorithmus. Jeder Router wählt also - basierend auf seiner vorhergehenden Analyse und auf dem Ergebnis des Algorithmus - individuell den nächsten Hop für das Paket. Beim konventionellen IP-Forwarding wird die Zuweisung eines Paketes zu einer FEC bei jedem Hop immer wieder ausgeführt. Dies erhöht den Verwaltungsaufwand und führt zu redundanten Rechenleistungen.
Im Unterschied dazu wird diese Zuweisung bei MPLS Netzen lediglich einmal, nämlich bei Eintritt eines Knotens in das Netzwerk, ausgeführt. Bei nachfolgenden Hops findet deshalb keine weitere Analyse des Headers durch andere Router mehr statt. Das gesamte Forwarding wird durch das Label gesteuert. Das Label dient hierbei als Index in einer Tabelle, das den nächsten Hop und ein neues Label spezifiziert.

Geht man nun generell von Netzwerken und insbesondere von MPLS-Netzen mit der Verwendung von FEC'S und Labels aus, so wird deutlich, daß das Forwarding im allgemeinen aber insbesondere beim Rückgriff auf (die Analyse abkürzende) Labels eine zusätzliche Anforderung mit sich bringen. Zwar dienen die Labels der Optimierung des Netzwerkbetriebes und schaffen ein schnelleres Switching aber es entsteht daher auch die Anforderung und Aufgabe, diese Schnelligkeit auch durch zeitoptimierte Verwaltungsalgorithmen zu unterstützen. Denn die Forwarding Informationen müssen ja organisiert, verwaltet und gepflegt werden, um einen fehlerfreien und sicheren Netzwerkbetrieb sicherzustellen. Besonders bei sich ändernden Pfaden durch beispielsweise den Ausfall eines bestimmten Routers müssen die gesamten Pfadinformationen konsistent für das gesamte Netzwerk nachgezogen werden.
D.h., daß der Datenverkehr, der bisher über einen bestimmten Knoten im Netz verlief, muß nun über einen anderen umgeleitet werden. Dazu müssen alle Datensätze, die den bisherigen Knoten enthielten konsistent auf den neuen Knoten umgesetzt werden. Diese Umleitung muß im gesamten Netzwerk einheitlich erfolgen, um Fehlattributierungen und Fehlübermittlungen zu vermeiden. Dies macht es zwingend erforderlich, daß möglichst schnell alle Datensätze gefunden werden, die den bisherigen Knoten als Eintrag enthielten um diesen abändern zu können. Vor allem in großen Netzen, deren Router den Datenverkehr über mehrere Tausend Pfade verschicken ist ein Verfahren erforderlich, das ein möglichst effizientes Auffinden und Verwalten von Pfadinformationen und -änderungen, insbesondere von einer Änderung in der IP-Forwarding-Tabelle, ermöglicht. Ein solches Verfahren ist bisher nicht bekannt. Bisher ist bei MPLS-Netzen eine umfangreiche und zeitaufwendige Suche in mehreren Datenstrukturen notwendig, durch spezifische und komplexe Suchalgorithmen.

Zieht man andere Ansätze, etwa die Verwaltung der relevante Informationen bei dem Signalisierungsverfahren Nr. 7 des heutigen ISDN heran, so erhält der Fachmann auch hier keine Lösungsvorschläge für diese Problemstellung. Bei diesem Signalisierungsverfahren werden invertierte Listen verwendet. Dabei wird einem Ziel (oder hier Knoten) alle Links zugeordnet, die auf ihn verweisen. Bei einer größeren Anzahl von Links übersteigt dieses Verfahren schnell den möglichen Speicherplatz und führt zu einer Überlastung des Systems. Insbesondere in MPLS-Netzen muß mit einer erhöhten Zahl von Verweisen gerechnet werden, da nur die Labels und nicht der gesamte Header für ein Paket weitergeleitet wird. Von daher ist speziell für MPLS Netze eine entsprechende Lösung obiger Problemstellung nicht sinnvoll.

Die Aufgabe der vorliegenden Erfindung liegt daher in der Strukturierung der relevanten Informationen durch Schaffung einer geeigneten Datenstruktur, die einen zeit- und ressourcen-optimierten Zugriff auf die Informationen ermöglicht. Eine weitere Aufgabe besteht darin, ein Verfahren zur Verfügung zu stellen, das eine effiziente Verwaltung von Pfadinformationen und deren Änderungen in einem Netz ermöglicht, insbesondere eine effiziente Suche und/oder Änderung von entsprechenden Objekten in den jeweiligen Datenstrukturen ermöglicht.

Diese Aufgabe wird erfindungsgemäß durch die eingangs erwähnte Datenstruktur gelöst, bei der die Informationen in einer ersten und in einer zweiten Datenstruktur implementiert sind, die zusätzlich zu den Informationen jeweils mindestens eine Entität pro Objekt aufweisen, so daß die Verarbeitung der Informationen in der ersten und zweiten Datenstruktur mit Hilfe der zusätzlichen Entitäten erfolgt.

Weiterhin liegt die Lösung der Aufgabe in einem Verfahren nach der Lehre des Anspruchs 9, nämlich in einem rechnergestützten Verfahren zur Verarbeitung von Forwarding- und/oder Routing-Informationen in einem Netzwerk unter Zugriff auf zumindest eine erste Datenstruktur und eine zweite Datenstruktur, die zusätzlich zu den Informationen jeweils mindestens eine weitere Entität pro Objekt aufweisen, mit folgenden Schritten:
a) Zugriff auf das/die zu verarbeitende(n) Objekt(e) in der ersten und zweiten Datenstruktur zumindest teilweise über die zusätzlichen Entitäten,
b) Verarbeiten der Informationen mittels standardisierter, zeit-optimierter Algorithmen.

Die erfindungsgemäße Lösung der Aufgabe bietet den wichtigen Vorteil, daß durch die spezifische Auslegung der Datenstrukturen Standard Listenalgorithmen verwendbar werden, die bisher nicht angewendet werden konnten. Diese verringern zudem die Verwaltungs- und Zugriffszeiten.

In einer bevorzugten Ausführungsform der Erfindung umfaßt das Verfahren eine Organisation von Pfadänderungen bzw. eine Pfadverwaltung, wobei die Pfade auf einem explizitem Routing basieren. Alternativ dazu ist ein Hop-to-Hop Routing einsetzbar.

Eine weitere, besonders bevorzugte Ausführungsform besteht in der Erweiterung einer gegebenen, ersten Datenstruktur - der Label-Informations-Basis (nachfolgend kurz: LIB) - um zwei Pointer. Daraus entsteht der in der Praxis sich als sehr wesentlich erweisende Vorteil, daß die Suche eines Eintrages in einer Liste sehr viel schneller ausgeführt werden kann und daß der Verwaltungsaufwand für Änderungen des Pfades, insbesondere das Löschen und Einfügen eines Routers (Knotens), deutlich reduziert wird. Der Aufwand (Speicherplatz) steht hierbei zu dem erreichten Erfolg in einem sehr positiven Verhältnis.

Alternativ dazu, kann diese gegebene, erste Datenstruktur allerdings auch nur um eine Entität, nämlich einen Pointer, erweitert werden, was allerdings das erfindungsgemäße Verfahren etwas verzögert.

Andere vorteilhafte Weiterbildungen der Erfindung ergeben sich aus den Unteransprüchen.

Weitere Vorteile der Erfindung und besondere Ausführungsformen mit deren Merkmalen sind in der nachfolgenden detaillierten Figurenbeschreibung dargestellt. Darin zeigt:
Fig. 1 eine schematische Darstellung einer Umleitung von einem Knoten auf einen anderen
Fig. 2 eine schematische Darstellung von einer ersten und einer zweiten erfindungsgemäßen Datenstruktur.

Im Folgenden wird einleitend kurz der allgemeine Aufbau der erfindungsgemäßen ersten und zweiten Datenstrukturen A', B' und den Erweiterungen der gegebenen ersten und zweiten Datenstrukturen A, B vorgestellt, unter beispielhafter Bezugnahme auf ein MPLS-Netz.

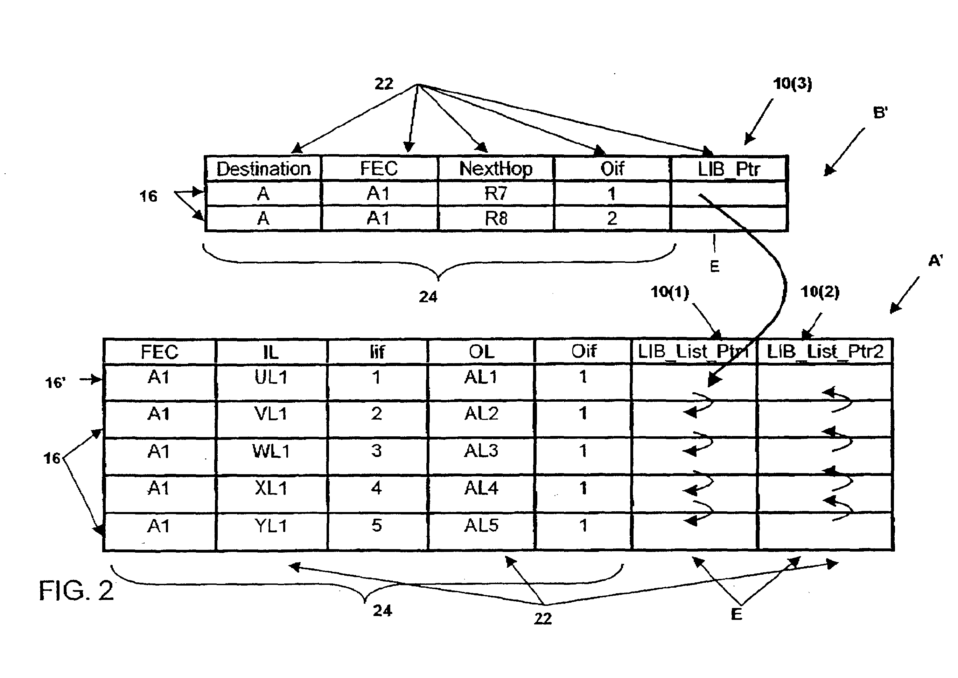

Unter Bezugnahme auf Fig. 2 wird der Aufbau der ersten Datenstruktur A' und der zweiten Datenstruktur B' erläutert. Datenstruktur A' umfaßt in diesem Ausführungsbeispiel zusätzlich zu den Informationen für das Forwarding zwei Pointer: einen ersten Pointer 10(1) und eine zweiten Pointer 10(2) für jedes Objekt 16. Die Datenstruktur B' umfaßt parallel dazu neben den Informationen 24 für das Forwarding einen dritten Pointer 10(3) pro Objekt 16.

Indirekt ist in Fig. 2 auch der Aufbau der bisher bekannten und im Stand der Technik verwendeten gegebenen, ersten Datenstruktur A und der gegebenen, zweiten Datenstruktur B dargestellt: Verzichtet man bei der Datenstruktur B' auf den letzten Eintrag 22, nämlich den Pointer 10(3), so erhält man die gegebene, zweite Datenstruktur B. Verzichtet man bei der Datenstruktur A' auf die letzten beiden Einträge 22, nämlich die Pointer 10(1) und 10(2), so erhält man die gegebenen, erste Datenstruktur A.

Bisher sind die für das Forwarding relevanten Daten sind in der gegebenen, ersten und zweiten Datenstruktur A, B - jeweils in Form einer Liste - abgelegt.

Eine Liste "Label-Informations-Basis" (nachfolgend kurz: LIB) besteht für jeden Router im Netz und umfaßt dabei Einträge mit folgenden Informationen: Angabe einer Forwarding-Äquivalenz-Klasse (auch: Forwarding-Equivalence-Class, nachfolgend kurz: FEC), Eingangs-Label (IL), Eingangs-Schnittstelle (Iif), Ausgangs-Label (OL) und Ausgangs-Schnittstelle (Oif).

Die gegebene erste Datenstruktur A besteht also aus Objekten 16 von n-Tupeln mit den vorherstehend genannten Einträgen 22.

Erfindungsgemäß sind in der ersten Datenstruktur A' zusätzlich zwei weitere Felder vorgesehen, in denen für jedes Objekt 16 ein Pointer 10(1) und ein Pointer 10(2) realisiert ist. Der Pointer 10(1) zeigt auf das jeweils nächste Objekt 16 in der jeweiligen Datenstruktur, also in der LIB. Der Pointer 10(2) zeigt dabei auf das jeweils vorhergehende Objekt 16 in der LIB. In einer bevorzugten Ausführungsform der Erfindung umfassen die Pointer 10(1), 10(2) je 4 Byte.

Neben der Liste LIB existiert eine weitere gegebene, zweite Datenstruktur B, die sog. Forwarding-Informations-Basis (nachfolgend kurz: FIB), die ebenfalls in Form einer Liste implementiert ist und für jeweils einen Knoten im Netz existiert. Sie enthält Einträge mit Informationen über die generelle Zielrichtung (Senke) eines Paketes (Destination) und über dessen Zugehörigkeit zu einer bestimmten Forwarding-Äquivalenz-Klasse FEC, über den nächsten Hop (NextHop), in Form einer IP-Adresse, über die Ausgangs-Schnittstelle (Oi). Erfindungsgemäß umfaßt die zweite Datenstruktur B' zusätzlich zu den Einträgen 22 der gegebenen, zweiten Datenstruktur B einen Pointer 10(3). Der Pointer 10(3) zeigt auf das entsprechende Objekt 16' in der LIB.

Wesentlich für die erfindungsgemäße Lösung ist die Strukturierung der für das Forwarding eines Paketes relevanten Informationen 24, so daß eine sehr einfache Änderung der Datenstruktur, hier in Form einer Erweiterung, die Verwendung von Standard Algorithmen ermöglicht. Damit wird die Effizienz des Verfahrens zusätzlich gesteigert.

Im folgenden wird der Ablauf des erfindungsgemäßen Verfahrens unter Verwendung der oben beschriebenen, erfindungsgemäß erweiterten, gegebenen ersten und zweiten Datenstrukturen LIB und FIB vorgestellt.

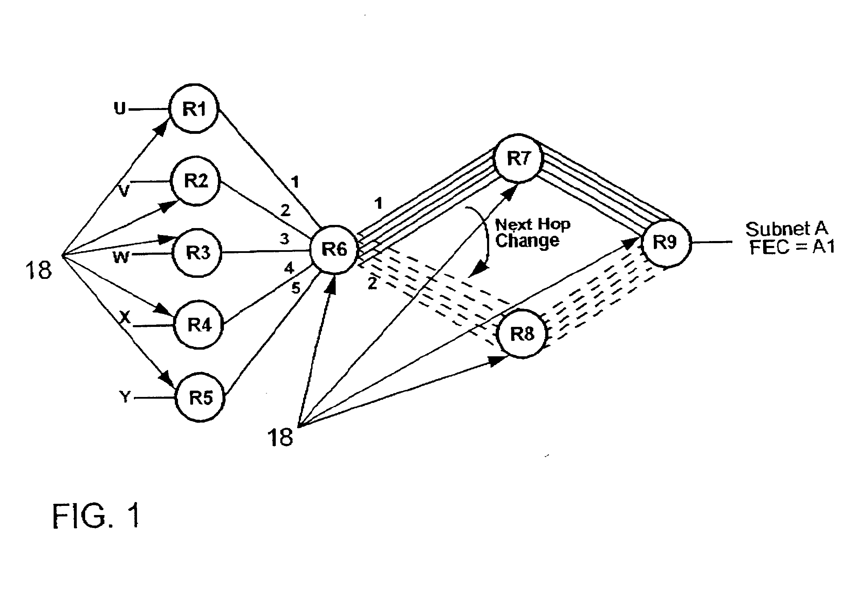

In Fig. 1 ist beispielhaft eine Pfadänderung dargestellt. Router 6 ändert hier seinen nächsten Hop von R7 auf R8. Mit Hilfe des halbkreisförmigen Pfeils in Fig. 1, der von der Gesamtheit der Pfade über R7 auf die Gesamtheit der Pfade, die über R8 verlaufen (diese sind in Fig. 1 gestrichelt dargestellt), verweist, soll die Umlenkung aller Pfade gekennzeichnet sein.

Üblicherweise bestehen die FIB und die LIB aus den oben dargestellten Pfad- und Paket-Forwarding-Informationen. Erfindungsgemäß werden diese gegebenen, ersten und zweiten Datenstrukturen A, B um Pointer 10(3), 10(1) und 10(2) erweitert. Die FIB wird dabei um einen Pointer 10(3) erweitert, der auf den entsprechenden Eintrag in der LIB verweist. Die LIB ihrerseits ist um vorzugsweise zwei Pointer 10(1) und 10(2) erweitert, die somit eine doppelt verkettete Liste erzeugen. Nach dieser Erweiterung können nun übliche, im Stand der Technik bekannte Listen-Verwaltungs-Algorithmen zur Verwaltung von veränderten Pfadinformationen 24 eingesetzt werden. Durch Schaffung dieser Doppel-Verkettung wird zwar der Speicherplatz pro Objekt 16 in der Datenstruktur erhöht und es verdoppelt sich auch die Zahl der nötigen Schritte, insbesondere des Umhängens von Pointern, pro Basisoperation (Löschen oder Einfügen eines Objektes 16) aber es wird gleichwohl der nicht zu unterschätzende Vorteil erzielt, daß sich damit die Effizienz des gesamten Verfahrens erhöht. Weiterhin wird es möglich, sich in der Liste vor und zurück zu bewegen, ohne daß das Suchverfahren nochmals neu gestartet werden muß. Auch läßt sich die Suchaufgabe "Finde das Objekt vor dem gegebenen Objekt" wesentlich effizienter bewerkstelligen.

Zieht man Fig. 2 heran, so wird die Erweiterung in dieser Ausführungsform offensichtlich. In dem dargestellten Ausführungsbeispiel sollen alle Pfade, die nach dem Router R6 über den Router R7 verlaufen auf den Router R8 umgeleitet werden. Sobald der Router R 6 also seinen "next hop change" von R7 auf R8 ändert, müssen alle Pfade, die bisher über R7 verliefen einheitlich umgelegt werden, so daß sie nachfolgend über R8 verlaufen. In der FIB für Knoten bzw. Router R6 sind zwei Objekte 16 dargestellt, wobei das erste den ursprünglichen Pfad über R7 betrifft und das zweite Objekt 16 sich auf die von R6 vorgegebene Änderung bezieht. Als Reaktion auf die Änderung in der Liste FIB müssen alle Pfade, die in der Liste mit den Pfad-Informationen LIB gespeichert sind, konsistent auf R8 umgeleitet werden. Vergegenwärtigt man sich anhand dieses Beispiels nun reale und damit wesentlich komplexere Listen, wird die Komplexität dieser Such-Aufgabe offensichtlich. Es ist deshalb unerläßlich, diese Aufgabe möglichst schnell auszuführen. Deshalb besteht die erfindungsgemäße Lösung darin, die Datenstrukturen so zu erweitern, daß zeit- und ressourcen-optimierte Algorithmen für diese Aufgabe verwendet werden können.

Bislang mußte man hingegen für die Bewältigung dieser Aufgabe spezifische Algorithmen verwenden, die beispielsweise eine hohe Anzahl von Zugriffen auf einzelne Objekte 16 in den Datenstrukturen aufwiesen und somit wesentlich höhere Laufzeiten hatten.

Nun erfolgt die Suche und Änderung aller relevante Objekte 16 in der Tabelle sehr effizient, indem der in der FIB startenden Liste entlang den Zeigern 10(1), 10(2) in der LIB gefolgt wird, um daraufhin jedes Objekt 16 innerhalb der jeweiligen Datenstruktur zu ändern, der bisher über R7 verlief und durch ein Objekt 16 zu ersetzen, das über R8 verläuft. Dabei beschleunigt die Rückwärts-Verkettung in der LIB durch den Pointer 10(2) die Änderungsoperation in dieser Liste zusätzlich.

Eine alternative Ausgestaltung der Erfindung liegt darin, die Liste LIB lediglich um eine Vorwärts-Verkettung, nämlich den Pointer 10(1) zu erweitern. Dies verzögert allerdings das Verfahren, und spart nur den gering zu schätzenden zusätzlichen Speicheraufwand à je 4 Byte ein.

Wesentlich für die erfindungsgemäße Lösung ist, daß bei einer Pfadänderung, d.h. beispielsweise einer Änderung nur eines Knotens 18 innerhalb eines MPLS-Pfades, alle mpls-netzrelevanten Informationen 24, die diesen Knoten 18 betreffen, konsistent mitgeändert werden müssen. Damit wird das Zurverfügungstellen einer Datenstruktur, die dies ermöglicht unerläßlich. So müssen erfindungsgemäß bei allen Änderungen in der LIB, insbesondere dem Einfügen oder dem Löschen von Objekten 16, lediglich die zwei Pointer 10(1) und 10(2) konsistent nachgezogen werden. Dieser zusätzliche Verwaltungsaufwand ist minimal, vor allem in Bezug zu den enorm reduzierten Zugriffszeiten.

Eine vorteilhafte Ausgestaltung des erfindungsgemäßen Verfahrens liegt in einer Art Konvertierung der Daten aus den gegebenen ersten und zweiten Datenstrukturen A, B nach dem Stand der Technik in die erste und zweite Datenstruktur A',B', so daß standardisierte Listenverwaltungsalgorithmen für die Verarbeitung der Forwarding Informationen 24 anwendbar sind.

Die vorstehend beschriebenen Ausführungsformen der Erfindung beziehen sich auf die Implementierung der Forwarding-Informationen 24 in Form von Listen und der Erweiterung der jeweiligen Datenstrukturen (Listen) durch die Entität E in Form von Pointern 10(x). Doch im Rahmen der Erfindung liegen ebenso Ausführungsformen, die eine andere Implementierung vorsehen - etwa in Form von Arrays - mit entsprechend angepaßten Entitäten E zur Erweiterung der Datenstrukturen, etwa in Form von zusätzlichen Indizes.

## Patentansprüche

1. Datenstruktur zur Verwendung bei der Verarbeitung von Routing- und/oder Forwarding Informationen (24) in einem Netzwerk mit zumindest einer ersten Datenstruktur (A') und einer zweiten Datenstruktur (B'), wobei die Informationen (24) in der ersten und zweiten Datenstruktur (A', B') implementiert sind und wobei die erste und zweite Datenstruktur (A', B') zusätzlich zu den Informationen (24) jeweils mindestens eine Entität (E) pro Objekt (16) aufweisen, so daß die Verarbeitung der Informationen (24) in der ersten und zweiten Datenstruktur (A', B') mit Hilfe der zusätzlichen Entitäten (E) erfolgt.

2. Datenstruktur nach Anspruch 1,
**dadurch gekennzeichnet, daß**
das Netzwerk ein paketvermitteltes Netzwerk, insbesondere ein MPLS-Netzwerk, ist.

3. Datenstruktur nach einem der vorhergehenden Ansprüche,
**dadurch gekennzeichnet, daß**
die erste Datenstruktur (A') und die zweite Datenstruktur (B') jeweils als Liste mit mehreren Einträgen (22) für jeweils ein Objekt (16) implementiert sind.

4. Datenstruktur nach einem der vorhergehenden Ansprüche,
**dadurch gekennzeichnet, daß**
die Entität (E) ein Pointer (10(x)) ist.

5. Datenstruktur nach einem der vorhergehenden Ansprüche,
**dadurch gekennzeichnet, daß**
in der ersten Datenstruktur (A') eine Label-Informations-Basis (LIB) gespeichert ist.

6. Datenstruktur nach einem der vorhergehenden Ansprüche,
**dadurch gekennzeichnet, daß**
in der zweiten Datenstruktur (B') eine Forwarding-Informations-Basis (FIB) gespeichert.

7. Datenstruktur nach einem der Ansprüche 4 mit 6,
**dadurch gekennzeichnet, daß**
jedes Objekt (16) der ersten Datenstruktur (A') zwei Pointer (10(1), 10(2)) umfaßt, wobei der erste Pointer (10(1)) auf das jeweils nächste Objekt (16) in der ersten Datenstruktur (A') und der zweite Pointer (10(2)) auf das jeweils vorherige Objekt (16) in der ersten Datenstruktur (A') zeigt.

8. Datenstruktur nach einem der Ansprüche 4 mit 7,
**dadurch gekennzeichnet, daß**
jedes Objekt (16) der zweiten Datenstruktur (B') einen dritten Pointer (10(3)) umfaßt, der jeweils auf ein korrespondierendes Objekt (16') in der ersten Datenstruktur (A') verweist.

9. Rechnergestütztes Verfahren, insbesondere nach einem der vorhergehenden Ansprüche, zur Verarbeitung von Forwarding- und/oder Routing-Informationen (24) in einem Netzwerk unter Zugriff auf zumindest eine erste Datenstruktur (A') und eine zweite Datenstruktur (B'), wobei die erste Datenstruktur (A') und die zweite Datenstruktur (B') zusätzlich zu den Informationen (24) jeweils mindestens eine weitere Entität (E) pro Objekt (16) aufweisen, mit folgenden Schritten:
a) Zugriff auf das/die zu verarbeitende(n) Objekt(e) (16) in der ersten und zweiten Datenstruktur (A', B') zumindest teilweise über die zusätzlichen Entitäten (E),
b) Verarbeiten der Informationen (24) mittels standardisierter, zeitoptimierter Algorithmen.

10. Verfahren nach Anspruch 9,
**gekennzeichnet durch**
folgende zusätzliche Schritte:
a) Aufteilen der Informationen (24) zumindest auf eine gegebene erste Datenstruktur (A) und eine gegebene zweite Datenstruktur (B),
b) Erweitern der gegebenen, ersten Datenstruktur (A) um mindestens eine Entität (E) pro Objekt (16) zur ersten Datenstruktur (A'),
c) Erweitern der gegebenen, zweiten Datenstruktur (B) um eine Entität (E) pro Objekt (16), die auf ein korrespondierendes Objekt (16') in der ersten erweiterten Datenstruktur (A') verweist, zur zweiten Datenstruktur (B')

11. Verfahren nach einem der Ansprüche 9 oder 10,
**dadurch gekennzeichnet, daß**
die Algorithmen für die Verarbeitung der Informationen (24) übliche Listenverwaltungsalgorithmen, insbesondere DELETE- und INSERT-Algorithmen, sind.

12. Verfahren nach einem der Ansprüche 9 bis 11,
**dadurch gekennzeichnet, daß**
die Verarbeitung der Forwarding- und/oder Routing-Informationen (24) die Verwaltung der Änderungen dieser Informationen (24) umfaßt.
